# EUROPEAN PATENT APPLICATION

(11) **EP 3 460 659 A1**
(43) Date of publication of application: **27.03.2019**
(21) Application number: 18152704.5
(22) Date of filing: 22.01.2018
(51) Int. Cl.: G06F 9/455, G06F 8/61, G06F 9/445, G06F 21/62

(54) **CREATING OR MODIFYING ARTIFACTS ON MOUNTED OPERATING SYSTEM VOLUMES**

(30) Priority: 26.09.2017 US 201715715445
(71) Applicant: Hewlett Packard Enterprise Development LP, Houston, TX 77070 (US)
(72) Inventor: BALA SUBRAMANIAN, Akila, 560048 Bangalore (IN); ALAMURU, Rajesh, 560048 Bangalore (IN); LUNDEBY, Bruce A, Ft. Collins, Colorado 80528-9544 (US); PADLIA, Abhay, 560048 Bangalore (IN); RAJEEVALOCHANAM, Tejaswi Bangalore, 560048 Bangalore (IN)
(74) Representative: Liesegang, Eva

(57) **Abstract**

Example implementations relate to enabling the creation and/or modification of artifacts on an operating system (OS) volume. A manager may be provided in communication with an appliance hosting an OS volume. The OS volume may be mounted on the manager to provide permissions to access the OS volume from the manager. Artifacts to be implemented on the mounted OS volume may be created and/or modified.

## Description

### BACKGROUND

Cloud-based computing architectures enable delivery of computing as a service, whereby a shared pool of configurable computing resources may be provided as a service to computing devices. The resources may be located remotely or locally, and may be shared over a network, *e.g*. the internet. Cloud computing may facilitate services such as Infrastructure-as-a-Service (IaaS), Platform-as-a-Service (PaaS), Software-as-a-Service (SaaS), etc.

Depending on user demand, a cloud service provider may provide any of the aforementioned services, and these services may take the form of provisioned resources on a cloud. For example, an application may be deployed at the request of a user, and a cloud service provider may responsively provision infrastructure resources, *e.g*. a virtual machine hosting an operating system volume, platform resources, etc., to enable deployment of the application.

### BRIEF DESCRIPTION OF THE DRAWINGS

Certain examples are described in the following detailed description and in reference to the drawings, in which:
FIG. 1 is a block diagram of an example system for deploying an operating system volume on a server node.
FIG. 2 is a block diagram of an example system for creating and/or modifying artifacts on a mounted operating system volume.
FIG. 3 is a flowchart depicting an example method for creating and/or modifying personalized artifacts implemented on an operating system volume.
FIG. 4 is a flowchart depicting an example method for deploying an operating system volume with personalized artifacts.
FIG. 5 is a block diagram of an example non-transitory computer readable storage medium for creating and/or modifying artifacts on a mounted operating system volume.
FIG. 6 is a block diagram of an example non-transitory computer readable storage medium for deploying an operating system volume with personalized artifacts.

### DETAILED DESCRIPTION OF SPECIFIC EXAMPLES

An operating system may be deployed on hardware, such as a server. A server may be modular in design, and may contain any number of hardware components. For example, a blade server may include multiple components having any number of server nodes. An operating system (OS) volume may be an instance of an operating system deployed or to be deployed on a hardware component of a server and any number of operating system volumes may be deployed on any number of server nodes.

In an example, an OS volume may be served to a server such that the server boots and runs from the OS volume. Prior to being served, the OS volume may be cloned from an operating system image, such as a master image or base image, and may be personalized thereafter for the server on which the OS volume will run.

Artifacts may personalize an OS volume. Specifically, an artifact may take the form of a command and/or script and may include the following information: the type of operating system to deploy, attributes of the server on which the OS volume will be deployed, the method by which the OS volume will be personalized, etc. In an example, the artifacts may personalize the OS in the form of a script that executes subsequent to the OS volume booting on the server. In a further example, the artifacts may personalize the OS by directly editing attributes in configuration files of the OS volume. Specifically, the script may execute a set of commands that personalize the OS volume by assigning custom attributes to the OS volume. Examples of custom attributes to be assigned to the OS volume may include host names, application configurations to be run on the OS volume, host network interface card configurations, user accounts, etc.

Artifacts may be developed for the personalization of an OS volume and may be tested. Artifacts developed for the personalization of an OS volume may be considered "personalized artifacts." An approach to testing personalized artifacts may include deploying the artifacts with an OS volume on a test server. The server may be booted with the OS volume, such that the OS volume may be personalized by the artifacts under test. In this example, the effects of the artifacts' personalization of the OS volume may be realized once the server is booted.

A wait period is associated with testing artifacts by booting a test server. Under this approach, the server is booted before the impact of the artifacts on the OS volume is realized. This waiting period may be endured for even minor changes made to an artifact under development. Additionally, where an artifact is written incorrectly, the artifact may prevent the server from booting, preventing examination of the artifacts under test. A component of the server may also be consumed during the testing process.

By mounting the OS volume on a manager, artifacts to be applied to the OS volume may be tested. The manager may include an interactive environment for creating and/or modifying artifacts without booting a server. In an example, the interactive environment may enable artifact manipulation of the OS volume through a management network, and may enable mounting and/or unmounting of the OS volume on the manager through a deployment network.

The manager may be in communication with an appliance hosting the OS volume, *e.g*. through the management network and/or the deployment network. The manager may include an identification code associated with an identification code of an OS volume to enable the mounting of the OS volume on the manager. Mounting the OS volume on the manager may enable access permissions to the OS volume from the manager. The manager may also include an interactive environment to enable the creation and/or modification of artifacts for personalizing the mounted OS volume.

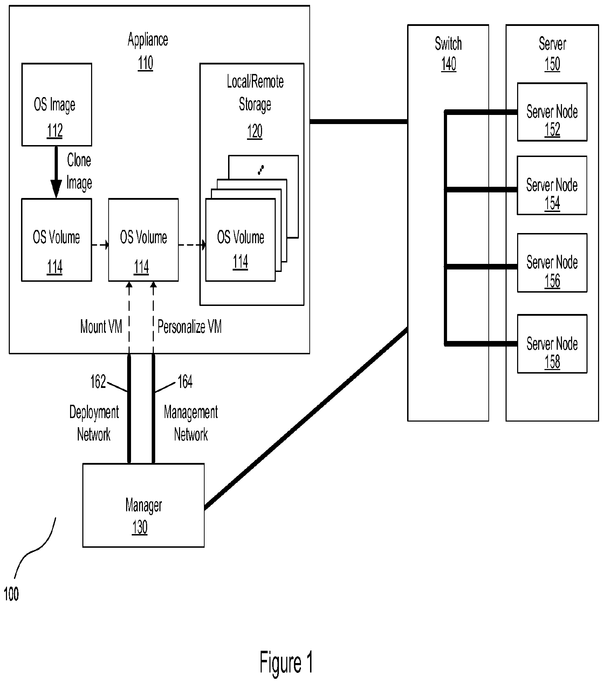

FIG. 1 is a block diagram of an example system 100 for deploying an operating system volume on a server node. An operating system (OS) volume may be said to be deployed on a server node where the OS volume is created, personalized, and served to the server node. In an example, OS volume 114 may be created by cloning, *i.e*. electronically copying, the OS volume from a generalized operating system image 112, often referred to as a master image, base image, or golden image. Generalized operating system image 112 may be hosted on an appliance 110, and may include drivers, third party applications, etc., for supporting the functionality of server hardware, but may not yet be personalized for the server node on which it will run.

Once cloned, OS volume 114 may be mounted on a manager 130. Manager 130 may be in communication with the appliance on which the OS volume is hosted, in this example, appliance 110. Appliance 110 may be implemented as hardware or a combination of hardware and software/firmware for creating, hosting, managing, and/or deploying OS volumes locally and/or across a network. Manager 130 may similarly be implemented as hardware or a combination of hardware and software/firmware. Manager 130 may be implemented within appliance 110, or may be a separate hardware component from appliance 110 in communication with appliance 110 over a network. In some implementations, manager 130 may be a virtual machine.

Manager 130 may share some network permissions with appliance 110. For example, manager 130 may have access to a deployment network 162 of appliance 110, such that manager 130 may mount and/or unmount OS volumes hosted by appliance 110 onto manager 130. Manager 130 may have access to a management network 164 of appliance 110. The connection to the management network may enable manager 130 to have access permissions to an OS volume hosted by appliance 110. Access permissions may include permissions to, access data and/or view contents of the OS volume, modify files of the OS volume, create and/or modify artifacts to be tested on the OS volume, execute scripts on the OS volume and/or otherwise manipulate the OS volume, etc. Thus, artifacts may be tested on the OS volume without booting a server node on which the OS volume is to be deployed.

Personalized OS volumes may be hosted on Appliance 110. FIG. 1 shows example OS volumes hosted on Appliance 110. In the example illustrated in FIG. 1, hosted OS volumes are stored on local and/or remote storage 120 of appliance 110. However, hosted OS volumes may be stored on any data storage medium. The hosted OS volumes may be hosted on any storage device accessible by a network, *e.g.* a Storage Area Network (SAN), such that a hosted OS volume may be served to a server over the network. Furthermore, any number of OS volumes may be hosted on local and/or remote storage 120.

OS volume 114 may be deployed on a server with any personalized artifacts created and/or modified by manager 130. In an example, OS volume 114 may be served to a server node over an internet Small Computer Systems Interface (iSCSI), or any other networking protocol for managing storage devices over a network. For instance, OS volume 114 may be served with accompanying personalized artifacts to any of server nodes 152-158. In an example, switch 140 may serve the personalized OS volume to any number of server nodes, including any combination of server nodes 152-158.

An OS volume may be booted on the server node to which the OS volume was served. In an example, the personalized artifacts created and/or modified by manager 130 may configure attributes of the booted OS volume. In an example, the attributes may be configured by executing commands in the form of plan scripts that execute after the OS volume boots. Personalized artifacts may, for example, configure attributes of OS volume 114 prior to, or upon being booted on any of server nodes 152-158. Thus, OS volume 114 may be personalized by the personalized artifacts created and/or modified by manager 130.

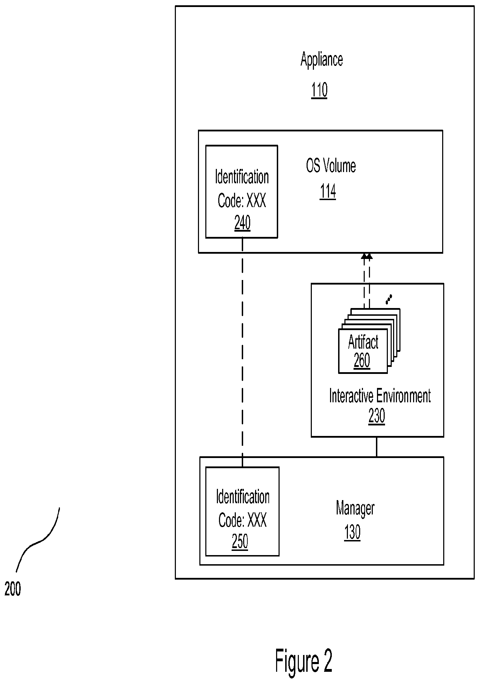

FIG. 2 is a block diagram of an example system 200 for creating and/or modifying artifacts on a mounted operating system volume. System 200 may include similar architecture to that of system 100. For clarity and conciseness, some of the components of system 200 may be described with reference to system 100 of FIG. 1, including OS volume 114, and appliance 110. As described above, OS volume 114 may be created and hosted on appliance 110.

As is further described above, manager 130 may share some network permissions with appliance 110. For example, manager 130 may have access to a deployment network of appliance 110, such that manager 130 may mount and/or unmount OS volumes hosted by appliance 110 onto manager 130. In an example, manager 130 may have restricted permissions to mount and/or unmount particular OS volumes. Manager 130 may, for example, have restricted permissions such that manager 130 may have an identification code, and may mount and/or unmount OS volumes that share an associated identification code with manager 130. As illustrated in FIG. 2, manager 130 shares an identification code 250 with the identification code 240 of OS volume 114. Thus, OS volume 114 may be mounted onto manager 130.

In an example, the identification code of manager 130 may be shared with an identification code of a server node to receive the OS volume, *e.g.* any of server nodes 152-158 of FIG. 1. OS volume 114, for example, may be served to a server node that shares an identification code with OS volume 114. Manager 130 may likewise share any number of identification codes with any number of server nodes such that manager 130 may mount any OS volume to be served to a server node with which manager 130 shares an identification code.

Manager 130 may have access to a management network of appliance 110. The connection to the management network may enable manager 130 to have access permissions to OS volume 114 where mounted on manager 130. Access permissions may include permissions to, for example, access data and/or view contents of OS volume 114, modify files of OS volume 114, create and/or modify artifacts 260 to be tested on OS volume 114, execute scripts on OS volume 114 and/or otherwise manipulate OS volume 114.

In an example, a user may access and/or manipulate an OS volume in any manner described above through interactive environment 230. For instance, a user may create and/or modify artifacts 260 to be tested on OS volume 114 through interactive environment 230. Via the management network, a user may also mount and/or unmount OS volumes hosted by appliance 110 through interactive environment 230. Via interactive environment 230, a user may mount OS volume 114 to modify the OS volume and/or create and/or modify artifacts to personalize the OS volume, and may unmount OS volume 114 thereafter. Interactive environment 230 may be accessible by a user and may be presented to a user as a graphical user interface, command line shell, menu driven interface, form-based interface, natural language interface, etc. Accordingly, a user may mount, unmount, and otherwise modify an OS volume and corresponding artifacts through interactive environment 230.

In some examples, the interactive environment is presented as a user interface. In some other examples, the interactive environment enables changing the identification code of the manager.

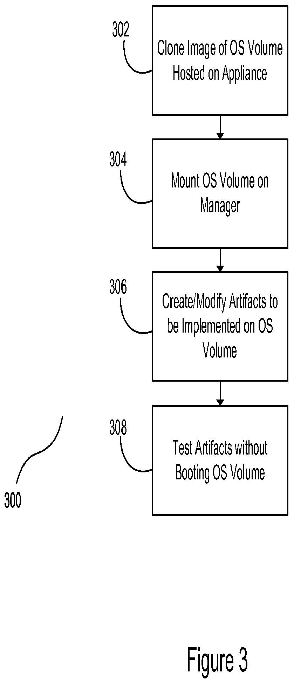

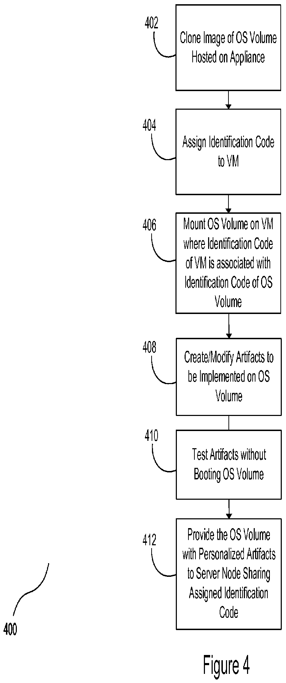

FIG. 3 is a flowchart depicting an example method 300 for creating and/or modifying personalized artifacts implemented on an operating system volume. FIG. 4 is a flowchart depicting an example method for deploying an operating system volume with personalized artifacts. Methods 300 and 400 may be executed or performed, for example, by some or all of the system components described above in system 100 and system 200 of FIGs. 1 and 2. Methods 300 and 400 may be implemented in the form of executable instructions stored on a machine-readable storage medium of a system and executed by a processor of the system. Alternatively or in addition, methods 300 and 400 may be implemented in the form of electronic circuitry (e.g. hardware). In some examples, steps of methods 300 and 400 may be executed substantially concurrently or in a different order than shown in FIG. 3 and FIG. 4 respectively. In some examples, methods 300 and 400 may include more or less steps than are shown in FIG. 3 and FIG. 4. In some examples, some of the steps of method 300 and 400 may, at certain times, be ongoing and/or may repeat.

At block 302, method 300 may include creating an operating system (OS) volume. In some implementations, an OS volume may be created by cloning an image, *e.g.* a master image, of an OS volume. The master image and/or the OS volume clone may be hosted by an appliance, *e.g.* appliance 110 of FIGs. 1 and 2.

At block 304, the OS volume may be mounted on a manager in communication with the appliance through a management network, *e.g.* manager 130 of FIG. 1 and FIG. 2. In an example, a user may issue commands to mount and/or unmount the OS volume through the management network, and the mounting of the OS volume may be carried out through the deployment network. In some implementations, the manager may have an identification code, and the user may mount and/or unmount the OS volume where the OS volume has an identification code associated with the identification code of the manager.

Once mounted, the user may have access permissions to issue further commands: such as commands to modify the OS volume, commands to create and/or modify artifacts for personalization of the OS volume, commands to access content of the OS volume, etc. At block 306, personalized artifacts to be implemented on the OS volume may be created and or modified through an interactive environment of the manager, *e.g.* interactive environment 230 of FIG. 2. At block 308, the artifacts may be tested without booting the OS volume. For example, a user may access content of the OS volume through the interactive environment such that the user may observe the effects of the artifacts on the OS volume. Thus, through the interactive environment, the artifacts may be created and/or modified, and thereafter tested on the OS volume without booting the OS volume. In some implementations, the user may, without booting the OS volume, apply artifacts to the OS volume for reconfiguration of the OS volume.

Turning to FIG. 4, an OS volume hosted on an appliance may be created at block 402. The OS volume may, in some examples, be created by cloning an image, *e.g.* a master image, of an OS volume. The master image and/or the created OS volume clone may be hosted by an appliance, *e.g.* appliance 110 of FIGs. 1 and 2.

At block 404, an identification code is assigned to a manager, *e.g.* manager 130 of FIG. 1 and FIG. 2. In some examples, the identification code may grant permissions to the manager to mount any OS volume having an identification code associated with the assigned identification code. In an example, the identification code assigned to the manager may be shared with an identification code of a server node to receive the OS volume, *e.g.* any of server nodes 152-158 of FIG. 1. The manager may be assigned any number of identification codes. Specifically, the manager may share any number of identification codes with any number of server nodes such that the manager may mount any OS volume to be served to a server node with which the manager shares an identification code.

At block 406, the OS volume having an identification code associated with an identification code of the manager may be mounted on the manager. In an example, a user may issue commands to mount and/or unmount OS volumes having identification codes associated with any identification code of the manager. In some implementations, the manager may share a management network and deployment network with an appliance hosting an OS volume to be mounted. In an example, the commands to mount and/or unmount an OS volume may be issued through the management network, and carried out through the deployment network.

At block 408, artifacts to be implemented on the mounted OS volume may be created, modified, and/or otherwise personalized to be implemented on the OS volume. At block 410, the artifacts to be implemented on the mounted OS volume may be tested without booting the OS volume. For example, a user may access content of the OS volume such that the user may observe the effects of the artifacts on the OS volume without booting the OS volume. In some examples, the user may issue commands to access content of the OS volume and/or create and modify artifacts to be issued on the OS volume through an interactive environment of the manager, as described in greater detail above.

At block 412, the personalized OS volume may be provided to a server node sharing the identification code assigned to the manager at block 404. In some implementations, the OS volume may be served to the server node through a deployment network shared by both the appliance hosting the OS volume and the manager. In an example, the OS volume may be served to a server node over an internet Small Computer Systems Interface (iSCSI), or any other networking protocol for managing storage devices over a network. Once served, the personalized OS volume may be booted on the server node.

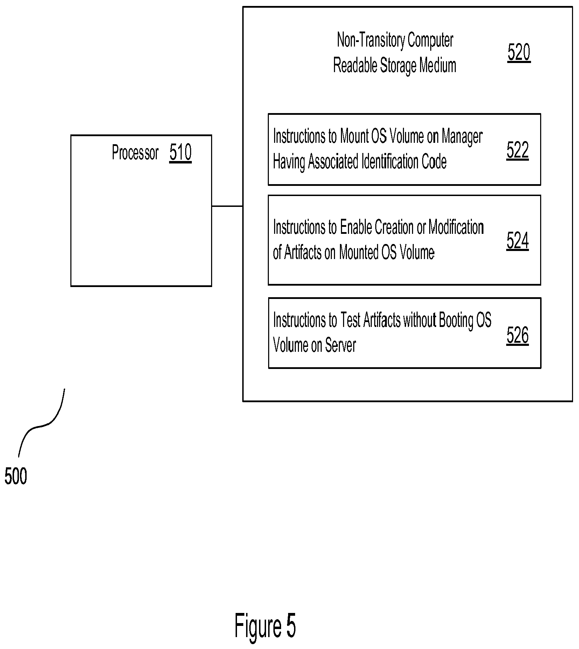

FIG. 5 is a block diagram depicting a non-transitory computer readable storage medium 520 for creating and/or modifying artifacts on a mounted operating system (OS) volume. In the foregoing discussion, manager 130 and appliance 110 were described as combinations of hardware and software/firmware. Referring to FIG. 5, the software/firmware may be processor executable instructions 522-526 stored on a non-transitory computer readable storage medium 520 and the hardware may include a processor 510 for executing those instructions. Thus, non-transitory computer readable storage medium 520 can be said to store program instructions or code that when executed by processor 510 implements a manager enabling the creation and/or modification of artifacts to personalize an OS volume hosted on an appliance.

Non-transitory computer readable storage medium 520 (or non-transitory computer readable storage medium 620) may be implemented in a single device or distributed across devices. Likewise, processor 510 may represent any number of physical processors capable of executing instructions stored by non-transitory computer readable storage medium 520 (or non-transitory computer readable storage medium 620). Further, non-transitory computer readable storage medium 520 (or non-transitory computer readable storage medium 620) may be fully or partially integrated in the same device as processor 510, or it may be separate but accessible to that device.

In one example, the program instructions may be part of an installation package that when installed can be executed by processor 510 to implement the creation and/or modification of artifacts on a mounted OS volume, and/or the service of the OS volume and personalized artifacts to a server node. In this case, non-transitory computer readable storage medium 520 (or non-transitory computer readable storage medium 620) may be a portable medium such as a floppy disk, CD, DVD, or flash drive or a memory maintained by a server from which the installation package can be downloaded and installed. In another example, the program instructions may be part of an application or applications already installed. Here, non-transitory computer readable storage medium 520 (or non-transitory computer readable storage medium 620) may include a hard disk, optical disk, tapes, solid state drives, RAM, ROM, EEPROM, or the like.

Processor 510 may be a central processing unit (CPU), graphics processing unit (GPU), microprocessor, and/or other hardware device suitable for retrieval and execution of instructions stored in non-transitory computer readable storage medium 520 (or non-transitory computer readable storage medium 620). Processor 510 may fetch, decode, and execute program instructions 522-526, and/or other instructions. As an alternative or in addition to retrieving and executing instructions, processor 510 may include at least one electronic circuit comprising a number of electronic components for performing the functionality of instructions 522-526, or instructions 622-630, and/or other instructions.

Non-transitory computer readable medium 520 may include instructions 522 to mount an operating system (OS) volume on a manager. Specifically, instructions 522 may mount the OS volume on a manager having an identification code associated with an identification code of the OS volume. As described in greater detail above, mounting the OS volume on the manager may enable access permissions to the OS volume from the manager through an appliance hosting the OS volume.

Non-transitory computer readable medium 520 may include instructions 524 to enable the creation and/or modification of artifacts on the mounted OS volume. In an example, instructions 524 may enable the creation and/or modification of artifacts via commands issued through a user interface. Non-transitory computer readable medium 520 may further include instructions 526 to enable testing of the artifacts on the OS volume without booting the OS volume. For instance, a user, without booting the OS volume, may access content of the OS volume through the manager such that the user may observe the effects of the artifacts as would be applied to the OS volume.

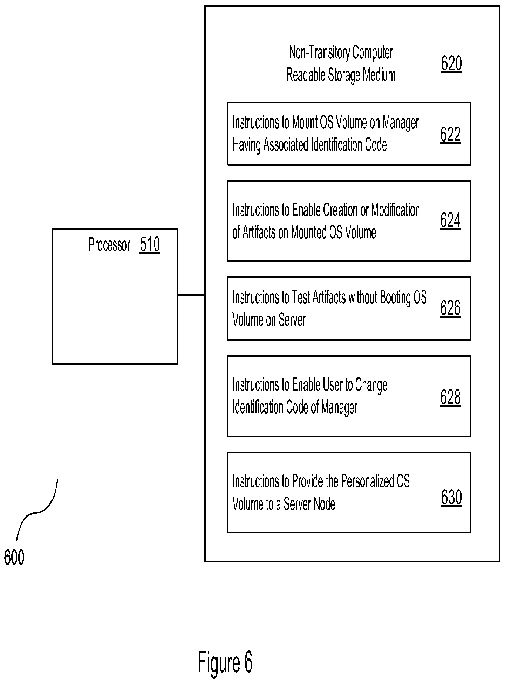

FIG. 6 is a block diagram depicting a non-transitory computer readable storage medium 620 for deploying an operating system volume with personalized artifacts. Non-transitory computer readable storage medium 620 may include instructions 622 to mount an operating system (OS) volume on a manager. Specifically, instructions 622 may mount the OS volume on a manager having an identification code associated with an identification code of the OS volume.

Non-transitory computer readable storage medium 620 may include instructions to enable the creation and/or modification of artifacts on the mounted OS volume. In an example, instructions 624 may enable the creation and/or modification of artifacts via commands issued through a user interface. Non-transitory computer readable medium 620 may further include instructions 626 to enable testing of the artifacts on the OS volume without booting the OS volume. For instance, a user, without booting the OS volume, may access content of the OS volume through the manager such that the user may observe the effects of the artifacts as would be applied to the OS volume. In some implementations, the user may, without booting the OS volume, apply artifacts to the OS volume for reconfiguration of the OS volume.

Non-transitory computer readable storage medium 620 may include instructions 628 to enable a user to change the identification code of a manager. For example, instructions 628 may enable a user to add, delete, or otherwise change an identification code of the manager through an interactive environment, *e.g.* interactive environment 230 of FIG. 2. The identification code may grant permissions to the manager to mount any OS volume having an identification code associated with the assigned identification code. In an example, the identification code assigned to the manager may be shared with an identification code of a server node to receive the OS volume, *e.g.* any of server nodes 152-158 of FIG. 1. In some implementations, instructions 628 may enable a user to assign any number of identification codes to the manager. Specifically, manager may be assigned any number of identification codes associated with identification codes of any number of OS volumes.

Non-transitory computer readable storage medium 620 may include instructions 630 to serve the OS volume with the personalized artifacts to a server node. In some implementations, the OS volume may be served to the server node through a deployment network shared by both the appliance hosting the OS volume and the manager. In an example, the OS volume may be served to a server node over an internet Small Computer Systems Interface (iSCSI), or any other networking protocol for managing storage devices over a network. Once served, the OS volume may be booted on the server node. In some implementations, the personalized artifacts may personalize the OS volume upon booting the server node.

In some examples, the creation or modification of artifacts on the mounted OS volume is enabled through a user interface.

In some other examples, the non-transitory machine readable storage medium further comprises instructions to cause the processor to enable a user to change the identification code of the manager.

In some other examples, the non-transitory machine readable storage medium further comprises instructions to cause the processor to provide the personalized OS volume to a server node.

In the foregoing description, numerous details are set forth to provide an understanding of the subject disclosed herein. However, implementations may be practiced without some or all of these details. Other implementations may include modifications and variations from the details discussed above. It is intended that the appended claims cover such modifications and variations.

## Claims

1. A manager in communication with an appliance hosting an operating system (OS) volume comprising:
an identification code to mount a hosted OS volume associated with the identification code on the manager, wherein mounting the OS volume on the manager enables access permissions to the OS volume from the manager; and
an interactive environment to enable creation or modification of artifacts on the mounted OS volume through the appliance without booting the OS volume on a server, wherein the artifacts personalize the OS volume.

2. The manager of claim 1, wherein the identification code is shared with an identification code of a server node to receive the OS volume.

3. The manager of claim 2, wherein the server node is a compute blade of a blade server, and the OS volume is iSCSI served to the compute blade.

4. The manager of claim 1, wherein the manager is in communication with the appliance over a management network to enable access to data on the mounted OS volume.

5. The manager of claim 4, wherein the artifacts are hosted by the appliance, and wherein the accessible data includes the artifacts to be created or modified.

6. The manager of claim 1, wherein the manager is in communication with the appliance over a deployment network to mount or unmount the OS volume associated with the identification code.

7. The manager of claim 6, wherein the OS volume is iSCSI mounted or unmounted on the manager over the deployment network.

8. The manager of claim 1, wherein the artifacts personalize the mounted OS volume by configuring custom attributes of the OS volume.

9. A method comprising:
cloning an image of an operating system (OS) volume hosted on an appliance for deploying OS volumes;
mounting the OS volume on a manager in communication with the appliance through a management network;
through an interactive environment of the manager, creating or modifying artifacts to be implemented on the OS volume; and
testing the artifacts without booting the OS volume.

10. The method of claim 9, further comprising assigning an identification code to the manager, wherein the OS volume is mounted on the manager where the identification code of the manager is associated with an identification code of the OS volume.

11. The method of claim 10, wherein the assigned identification code is shared with an identification code of a server node to receive the OS volume.

12. The method of claim 11, further comprising providing the OS volume with the artifacts to the server node sharing the assigned identification code.

13. The method of claim 9, wherein the manager is in further communication with the appliance through a deployment network to mount or unmount the OS volume.

14. The method of claim 13, wherein mounting the OS volume comprises iSCSI mounting or unmounting the OS volume on the manager over the deployment network.

15. A non-transitory machine readable storage medium comprising instructions executable by a processor for deploying an operating system (OS) volume with personalized artifacts, the machine-readable storage medium comprising:
instructions to cause the processor to mount the OS volume on a manager having an identification code associated with an identification code of the OS volume, wherein mounting the OS volume on the manager enables access permissions to the OS volume from the manager through an appliance hosting the OS volume;
instructions to cause the processor to enable creation or modification of artifacts on the mounted OS volume, wherein the artifacts personalize the OS volume; and
testing the artifacts without booting the OS volume on the server.
